# EUROPEAN PATENT SPECIFICATION

(11) **EP 1 328 484 B1**
(45) Date of publication and mention of the grant of the patent: **12.07.2006**
(21) Application number: 01985330.8
(22) Date of filing: 09.10.2001
(51) Int. Cl.: C03C 4/08, C03C 3/11, C03C 3/064

(54) **NON-PHOTOCHROMIC, COLORED, BOROSILICATE INORGANIC GLASSES WHICH ABSORB ULTRAVIOLET, AND PREPARATIONS**
NICHT-PHOTOCHROME, GEFÄRBTE, ANORGANISCHE BOROSILIKATGLÄSER DIE ULTRAVIOLETTE STRAHLUNG ABSORBIEREN, UND VERFAHREN ZUR HERSTELLUNG
VERRES INORGANIQUES EN BOROSILICATE, COLORES, NON PHOTOCHROMES, ABSORBANT L'ULTRAVIOLET, ET PREPARATIONS CORRESPONDANTES

(30) Priority: 27.10.2000 FR 0013811
(43) Date of publication of application: 23.07.2003
(73) Proprietor: Corning SAS, 77920 Samois sur Seine (FR)
(72) Inventor: BROCHETON, Yves, F-77210 Samoreau (FR); CARLIER, Bernard, F-77000 La Rochette (FR)
(74) Representative: Le Roux, Martine
(86) International application number: PCT/EP2001/012283
(87) International publication number: WO 2002/036512

(56) References cited:
- EP-A- 0 384 555
- EP-A- 0 710 630
- WO-A-97/14661
- US-A- 5 607 493

## Description

The present invention relates to novel colored borosilicate inorganic glasses according to claims 1-7, as well as to a method of preparing them according to claim 9.

Said novel borosilicate inorganic glasses are both colored and non-photochromic and at the same time absorb ultraviolet and are obtainable in various colors from a single mixture of oxides or a single crude borosilicate glass of defined composition.

Said novel glasses of the invention are perfectly suitable as corrective or non-corrective sunglasses.

According to prior art, many sunglasses have already been developed, more particularly in the three following basic tints : green, grey and brown. At present, as regards the performances of said glasses, more and more demands are made from the glasses, especially in terms of protection against ultraviolet rays and in terms of recognition of road signals.

Conventionally, a given tint is obtained from the presence of an effective amount of colorant(s) in the basic glass composition. A single glass of given color is obtained from said basic composition. Said glass can absorb ultraviolet if it contains iron oxide and/or vanadium oxide. However, UV cut-offs greater than 380 nm, which are compatible with a transmission in the visible which is sufficiently high to render said glass commercially viable, are difficult to obtain according to prior art.

In US patent US-A-5,281,562, non-photochromic, borosilicate inorganic glass compositions are described which contain copper halide or copper-cadmium halide crystals, and which have an abrupt optical absorption cut-off at about 400 nm. Within these compositions, the contents of oxides are adjusted in order to maintain a certain basicity (an R value of between 0.15 and 0.45). The glasses in question can contain up to 1% by weight of colorant(s), and can therefore have a particular fixed tint.

US patent US-A-5,242,869 also describes non-photochromic borosilicate glasses which, in addition to copper halides for absorbing ultraviolet, contain coloring agents of the iron oxide, nickel oxide, manganese oxide, cobalt oxide, vanadium oxide, chromium oxide, copper oxide, neodymium oxide and palladium oxide type.

The (non-photochromic) glass compositions of both these patents do not contain any silver and must be modified in substance in order to obtain various tints.

Furthermore, photochromic borosilicate inorganic glasses are known which do not possess any ultraviolet absorbing properties.

US patent US-A-3,208,860 describes such photochromic glasses which are not colored. Said glasses contain silver halides and can contain 0.01 to 1 % of copper oxide(s).

Colored photochromic glasses of this type also exist. They contain suitable colorants.

Finally, it has been described in US patent US-A-3,892,582 of the possibility of tinting a photochromic transparent borosilicate inorganic glass (which contains silver halide particles) by heating it under a reducing atmosphere. Said heating permanently confers a tint to said transparent glass without altering its photochromic properties.

Within such a context, the inventors thus propose novel non-photochromic, colored glasses which absorb ultraviolet (with abrupt absorption cut-offs of greater than 380 nm), and which are obtainable in various colors from a single mixture of oxides.

The presently claimed invention is interesting in both terms of product and in terms of process (of processability). The invention enables non-photochromic, colored glasses, which absorb ultraviolet and which are of various colors, to be obtained from a single mixture of starting materials, even from a single crude borosilicate glass of defined composition (which is non-photochromic despite the presence of silver within it, which absorbs ultraviolet if it has undergone a suitable heat-treatment, and which is colored since it contains at least one colorant within it), by heat-treatments which are carried out under given conditions of duration and/or of temperature. Said starting crude colored borosilicate glass, as well as said colored glasses of various colors which are obtainable by treatment of it, all constitute glasses of the invention, which are first generation glasses and second generation glasses, respectively.

According to its first object, the presently claimed invention thus relates to a non-photochromic, colored, borosilicate inorganic glass which absorbs ultraviolet and which contains effective amounts of silver, of copper, of halogen(s), of reducing agent(s) and of colorant(s).

Said inorganic glass is a glass based on silica (SiO₂) and boron oxide (B₂O₃). Its inorganic matrix can obviously contain other oxides, such as Al₂O₃, ZrO₂, Li₂O, Na₂O, K₂O, MgO, CaO, SrO, BaO, ZnO, PbO, TiO₂, Nb₂O₅, La₂O₃, Y₂O₃... Compositions by weight of matrices are specified later on in the present text in an illustrative manner.

Said borosilicate inorganic glass is a colored glass. It contains an effective amount of at least one colorant. The following oxides : Fe₂O₃, NiO, CoO, V₂O₅, MnO, SeO₂, Cr₂O₃ and Nd₂O₃ can be cited in a non-lixniting manner as suitable colorants which can be incorporated alone or in a mixture within the glasses of the invention.

Said colored borosilicate inorganic glass absorbs ultraviolet. It has an abrupt optical absorption cut-off of greater than 380 nm, generally towards or greater than 400 nm (said abrupt UV cut-off; expressed in nm, corresponds to the wavelength at which 1 % transmission is observed, below which the glass absorbs at more than 99% and over which it hardly absorbs any more). To this end, it contains suitable amounts of copper, of halogen(s) and of reducing agent(s).

The copper is incorporated in the glass of the invention, with reference to the absorption of ultraviolet, in the same way as in the glasses according to US patents US-A-5,281,562 and US-A-5,242,869. It is noted at this juncture that express mention has not been made of the incorporation of said copper in combination with cadmium. The combined presence of copper and cadmium is however not totally excluded, but the person skilled in the art does not ignore the problems of toaicity which are linked to the incorporation of cadmium.

Said copper is incorporated in the glass of the invention in amounts which are far greater than in the glasses according to US patent US-A-3,208,860 in which it is incorporated for other purposes.

Said copper is generally incorporated in said glasses of the invention at the rate of 0.15 to 1.5 parts by weight per 100 parts by weight of their borosilicate base.

Said colored borosilicate inorganic glass which absorbs ultraviolet characteristically further contains silver.

In an entirely unexpected way, said silver does not confer photochromic properties to the colored glass of the invention and enables glasses of various colors to be obtained from a single colored base by suitable heat-treatments. Said silver very likely also takes part in the ultraviolet absorption properties of the glasses of the invention.

Said silver is in general incorporated in the glasses of the invention at the rate of 0.0020 to 1.5 parts by weight per 100 parts by weight of their borosilicate base.

Said silver is present in the first generation and second generation glasses of the invention. It is responsible for the change of color during the heat-treatment of said first generation glasses in order to obtain said second generation glasses.

Advantageous variants of the glasses of the invention are now specified below.

In general, per 100 parts by weight of their borosilicate base, said glasses of the invention contain :
- from 0.0020 to 1.5 parts by weight of Ag, as indicated above ;
- from 0.15 to 1.5 parts by weight of Cu, as indicated above ; and,
- an effective amount of at least one halogen selected from Cl, Br, I and F, which is conjugated to :
- an effective amount of at least one reducing agent,
said effective amounts of halogen(s) and- of reducing agent(s) generating sufficient copper halide(s) for the absorption of the ultraviolet ; as well as
- an effective amount of at least one colorant.

The reducing agents which can be incorporated, alone or in a mixture, can notably be selected from SnO, SnO₂, Sb₂O₃ and As₂O₃.

The effective amount of their incorporation is generally between 0.1 and 5 parts by weight per 100 parts by weight of the borosilicate base.

As regards the halogens, they are incorporated in general at the rate of at least 0.25 part by weight per 100 parts by weight of the borosilicate base. They are incorporated very rarely at more than 10 parts by weight. Advantageously, each halogen which is incorporated is incorporated in an amount which is less than or equal to 3 parts by weight. Advantageously, chlorine and/or bromine is incorporated at least 0.25 part by weight.

The colorants which can be incorporated alone or in a mixture can notably be selected from Fe₂O₃, NiO, CoO, V₂O₅, MnO, SeO₂, Cr₂O₃ and Nd₂O₃. The glasses of the invention generally contain, per 100 parts by weight of its borosilicate base :
up to 7 parts by weight of Fe₂O₃,
and/or up to 2 parts by weight of NiO,
and/or up to 3 parts by weight of CoO,
and/or up to 10 parts by weight of V₂O₅,
and/or up to 2 parts by weight of SeO₂,
and/or up to 2 parts by weight of Cr₂O₃,
and/or up to 4 parts by weight of Nd₂O₃.

Said glasses of the invention advantageously contain, as colorant(s), nickel oxide (NiO) and/or cobalt oxide (CoO). These two colorants, which are used independently or in a mixture, ensure, within the context of the invention, particularly interesting colorations to the borosilicate glasses.

The advantageous amounts of incorporation of each one of the constituents above of the glasses of the invention, which are characteristically added into the borosilicate base, are specified below.

Per 100 parts by weight of their borosilicate base, the glasses of the invention thus advantageously contain :
- from 0.0050 to 1 part by weight of Ag ;
- from 0.2 to 1 part by weight of Cu ;
- from 0 to 2 parts by weight of Cl;
- from 0 to 2 parts by weight of Br, with at least 0.25 parts by weight of Br + Cl ;
- from 0 to 2 parts by weight of I ;
- from 0 to 2 parts by weight of F ;
- from 0.2 to 3 parts by weight of SnO ;
- from 0 to 3 parts by weight of SnO₂ ;
- from 0 to 3 parts by weight of Sb₂O₃ ;
- from 0 to 3 parts by weight of As₂O₃ ;
- from 0 to 3 parts by weight of Fe₂O₃ ;
- from 0.4100 to 1 part by weight of NiO ;
- from 0.0050 to 1 part by weight of CoO ;
- from 0 to 5 parts by weight of V₂O₅ ;
- from 0 to 0.5 part by weight of MnO ;
- from 0 to 0.5 part by weight of SeO₂ ;
- from 0 to 0.5 part by weight of Gr₂O₃ ; and
- from 0 to 0.5 part by weight of Nd₂O₃.

These advantageous ranges of incorporation set forth in combination are also to be considered independently of each other. Thus, for example, the glasses of the invention advantageously contain, per 100 parts by weight of their borosilicate base, from 0.0050 to 1 part by weight of silver and/or from 0.2 to 1 part by weight of copper and/or from 0.2 to 3 parts by weight of SnO and/or ...

As regards the borosilicate base of the glasses of the invention, to which suitable amounts of silver, of copper, of halogen(s), of reducing agent(s) and of colorant(s) are characteristically added, it advantageously has the following composition by weight:

| | | | |
|---|---|---|---|
| SiO₂ | 25 - 60 %, | preferably | 30 - 55 % |
| B₂O₃ | 10 - 35 %, | preferably | 15 - 28 % |
| Al₂O₃ | 3 - 17 %, | preferably | 6 - 12 % |
| ZrO₂ | 0 - 13 %, | preferably | 3 - 8 % |
| Li₂O | 0 - 15 %, | preferably | 1.5 - 3 % |
| Na₂O | 0 - 15 %, | preferably | 2 - 5 % |
| K₂O | 0 - 15 %, | preferably | 2.5 - 8 % |
| with Li₂O + Na₂O + K₂O > 2 % | | | |

| | | | |
|---|---|---|---|
| MgO | 0 - 10 %, | preferably | 0 - 3 % |
| CaO | 0 - 15 %, | preferably | 0 - 5 % |
| SrO | 0 - 15 %, | preferably | 0 - 5 % |
| BaO | 0 - 15 %, | preferably | 3 - 8 % |
| with MgO + CaO+ SrO + BaO > 1 % | | | |

| | | | |
|---|---|---|---|
| ZnO | 0 - 15 %, | preferably | 0 - 11 % |
| PbO | 0 - 8 %, | preferably | 0 - 5 % |
| TiO₂ | 0 - 8 %, | preferably | 0 - 5 % |
| Nb₂O₅ | 0 - 8 %, | preferably | 0 - 5 % |
| La₂O₃ | 0 - 8 %, | preferably | 0 - 5 % |
| Y₂O₃ | 0 - 8 %, | preferably | 0 - 5 %. |

The advantageous and preferable incorporation ranges above can also be considered independently of one another. In any case, they define, respectively, taken in combination, an advantageous composition by weight and a preferred composition by weight of the borosilicate base of the glasses of the invention.

Said borosilicate base of the glasses of the invention can therefore contain the components listed above, advantageously and preferably in the relative percentages by weight indicated above. It is not excluded that said base contain other components.

As regards the optional components, it is indicated that when they are incorporated, it is generally at least 0.25 - 0.5% (by weight).

The first generation glasses and the second generation glasses of the invention, notably the second generation glasses of the invention, as defined above, are more particularly suitable as sunglasses, corrective or not. Such sunglasses constitute the second object of the present invention.

Within the first and second objects of the present invention, glasses are found which are particularly interesting and which :
- have a suitable refractive index (1.523),
- absorb ultraviolet up to greater than 430 nm,
- have a transmittance in the UV and visible domains, typically greater than 5% and less than 25%, even between 8 and 18%,
- are in accordance to the requirements imposed with reference to the recognition of road signals, such as those defined by the ANSI Z80.3-1986 standard, and
- have a suitable color in the tones of green, grey and brown.

The third object of the present invention has now been arrived at, *i.e.* the methods of preparation of the inorganic glasses in question. The person skilled in the art will already have understood that the method in question is more or less complex, depending on whether a first generation glass or a second generation glass is prepared.

The method in question for obtaining a first generation glass of the invention may be considered to be an analogous method. It comprises. :
- preparing a crude borosilicate glass which contains the suitable amounts of silver, of copper, of halogen(s), of reducing agent(s) and of colorant(s) ; and
- heat-treating said crude glass in order to generate within it the crystal phase of the halide(s) which is responsible for the absorption of the ultraviolet.

The preparation of said colored crude borosilicate glass is classical. It comprises mixing and melting the compounds in question.

The heat-treatment of said colored crude glass is of the type of those described in US patents US-A-5,281,562 and US-A-5,242,869.

In order to obtain a second generation glass of the invention, the method of the invention comprises :
- preparing a crude borosilicate glass which contains the suitable amounts of silver, of copper, of halogen(s), of reducing agent(s) and of colorant(s) ;
- optionally heat-treating said crude glass in order to generate within it the crystal phase of the halide(s) which is responsible for the absorption of the ultraviolet ;
- polishing the surface of said borosilicate glass which is heat-treated or non-heat-treated ; and
- heat-treating said polished borosilicate glass under a reducing atmosphere ; said heat-treatment being carried out under conditions of duration and temperature which are suitable for obtaining the coloration sought after ; said heat-treatment also ensuring the generation of the crystal phase of the halide(s) which is responsible for the absorption of the ultraviolet if this crystal phase has not been generated beforehand.

According to a first variant, the method of the invention can therefore comprise obtaining a first generation glass and then, mainly, its heat-treatment under a reducing atmosphere.

According to a second variant, the method of the invention can comprise a single heat-treatment under reducing atmosphere which itself alone ensures the results sought after in terms of coloration and of absorption of ultraviolet (which ensures the direct obtaining of a second generation glass). Said single heat-treatment under reducing atmosphere is, within this context, carried out on a glass, which constitutes a potential precursor of a first generation glass of the invention.

The surface treatment - polishing - is carried out before the heat-treatment under reducing atmosphere insofar as said heat-treatment under reducing atmosphere produces effects within the first 100 nm of surface. Said surface heat-treatment is a method known *per se.*

The term « polishing » is employed here in an entirely non-limiting manner. In general, it designates any treatment which can confer, to said glass on which it is carried out, the state of the, surface sought after for the finished product.

With reference to the finishing of the glasses of the invention, a chemical tempering can be added to the steps of the two methods above. Carried out in a classical manner, such a tempering leads to increasing their mechanical resistance.

The heat-treatments set forth above are advantageously carried out under the following conditions:
- the heat-treatment of the crude borosilicate glass intended to generate a first generation glass of the invention : at a temperature between 450 and 650°C, for 10 minutes to 2 hours ;
- the heat-treatment under reducing atmosphere of the polished crude borosilicate glass (potential precursor of a first generation glass of the invention) or of the polished first generation glass of the invention : at a temperature between 250 and 650°C, for 2 minutes to 12 hours. Said reducing atmosphere generally contains hydrogen. Said reducing atmosphere can notably consist of pure hydrogen or of a mixture of nitrogen and hydrogen.

The carrying out of this heat-treatment, under reducing atmosphere, on a polished crude borosilicate glass of defined composition containing suitable amounts of silver, of copper, of halogen(s), of reducing agent(s) and of colorant(s) (first generation glass of the invention, if it has undergone the heat-treatment rendering it an ultraviolet-absorber or potential precursor of such a first generation glass, and in any case a precursor of a second generation glass of the invention), in order to confer a different color to said crude glass, is an innovating step *per se.*

The carrying out of such heat-treatments, under the conditions of different duration or (and) of temperature, on one glass of given suitable composition to generate numerous glasses of various colors, constitutes another object of the present invention.

In an entirely surprising way, the inventors have in fact prepared glasses of various colors (which are non-photochromic and which absorb UV) by heat treating, under a reducing atmosphere, a single crude borosilicate glass of defined, particular composition. Said crude borosilicate glass is a first generation glass of the invention or a potential precursor of such a glass (if it has not undergone the heat-treatment conferring ultraviolet-absorbing properties to it). In any case, it contains suitable amounts of silver, of copper, of halogen(s), reducing agent(s) and colorant(s).

The invention will now be illustrated under its different aspects, by the following Examples.

### Glasses A, B, C (First generation glasses - Table I)

The first, part of Table I gives the compositions by weight of borosilicate bases of three glasses of the invention

The second part of said Table I indicates the parts by weight of the additives added characteristically to said bases (per 100 parts by weight of said bases).

The third part of said Table I gives properties of the three glasses, A, B and C, of the invention (first generation glasses).

The glasses in question are obtained in a classical manner, *i.e.* by successively carrying out the following steps :
- mixing vitrifiable starting materials in the suitable amounts indicated in the first and second parts of Table I ;
- melting in a crucible between 1,100 and 1,200°C ;
- refining between 1,250 and 1,400°C ;
- conditioning between 1,200 and 1,250°C with the view to forming ;
- said forming for obtaining spectacles mouldings ;
- heat-treatment for obtaining the UV cut-off sought after: the mouldings are treated after pressing in an arch at a temperature of 600°C, for 20 minutes.

Upon completion of the implementation of these steps, said three glasses A, B and C are obtained.

They have a transmission of greater than 25%. Said transmission on the visible spectrum was measured under a thickness of 2 mm.

The color of each one of said glasses A, B and C is characterised by its chromatic co-ordinates (x,y) which are determined according to the C.I.E. trichromatic colorimetric system using the D65-illuminant.

The UV cut-off, expressed in nm, corresponds to the wavelength at which 1% transmission is observed, lower than which the glass absorbs at more than 99% and greater than which it hardly absorbs any more, given the abrupt character of the optical absorption cut-off.

**Table I**

| | A | B | C |
|---|---|---|---|
| Base (% by weight) | | | |
| SiO₂ | 48.7 | 48.7 | 39.4 |
| B₂O₃ | 21.4 | 21.4 | 21.7 |
| Al₂O₃ | 8.8 | 8.8 | 17.5 |
| ZrO₂ | 4.3 | 4.3 | 4.4 |
| Li₂O | 2.2 | 2.2 | 2.2 |
| Na₂O | 3.6 | 3.6 | 3.6 |
| K₂0 | 6 | 6 | 6.1 |
| BaO | 5 | 5 | 5.1 |
| Additives (parts by weight per 100 parts by weight of the base) | | | |
| Ag | 0.0300 | 0.0700 | 0.1000 |
| CuO | 0.450 | 0.330 | 0.45 |
| Cl | 0.0600 | 0.0600 | 0 |
| Br | 0.78 | 0.57 | 0.80 |
| SnO | 0.380 | 0.290 | 1.6 |
| Nd₂O₃ | 0.0500 | 0.0500 | 0 |
| NiO | 0.1100 | 0.1300 | 0.1000 |
| CoO | 0.0750 | 0.0750 | 0 |
| | | | |
| Transmission (%) | 32.5 | 33.4 | 32.0 |
| x | 0.2751 | 0.2961 | 0.2485 |
| y | 0.3043 | 0.3385 | 0.2796 |
| UV cut-off (nm) | 410 | 420 | 400 |
| | | | |
| Refractive index | 1.523 | 1.523 | 1.523 |

### Glasses 1 to 15 (Second generation glasses - Table II).

These second generation glasses were obtained from first generation glasses A, B and C.

A surfacing of said glasses A, B and C is first of all made according to usual techniques. An optical correction can be given to the piece during this surfacing, which confers an adapted geometry to it.

Then, a heat-treatment under hydrogen is carried out under the various conditions of temperature and/or of duration, which are specified in Table II. The glasses were in fact treated in batches, discontinuously, in an adapted static oven under a flow of pure hydrogen.

Obtaining the same results can be entirely conceived by a continuous treatment of said glasses, in an industrial arch having a controlled atmosphere which is equipped to this end.

The surfaced pieces were thus heat treated under a reducing atmosphere between 400 and 530°C for 5 to 240 minutes. During this step, the silver atoms and copper atoms present on the surface are reduced. The total UV visible transmission and the tint are also adapted. Six glasses (glasses 1 to 6), six glasses (glasses 7 to 12) and three glasses (glasses 13 to 15), of various colors, were obtained from a same glass A, B or C, respectively.

For said glasses 1 to 15, their transmission, their chromatic co-ordinates (x,y), their UV cut-off, as well as their conformity with the tests of road signal recognition, are also given in Table II.

**Table II**

| Examples | 1 | 2 | 3 | 4 | 5 | 6 |
|---|---|---|---|---|---|---|
| Crude glass | A | A | A | A | A | A |
| Heat-treatment temperature under hydrogen (°C) | 400 | 400 | 530 | 450 | 450 | 500 |
| Duration of heat-treatment under hydrogen (min) | 120 | 240 | 240 | 120 | 240 | 120 |
| Transmission (%) | 18.3 | 15.3 | 14.9 | 17.5 | 14.3 | 11.2 |
| x | 0.3139 | 0.3330 | 0.3399 | 0.3453 | 0.3773 | 0.3905 |
| y | 0.3348 | 0.3395 | 0.3415 | 0.3472 | 0.3595 | 0.3689 |
| UV cut-off (nm) | 410 | 410 | 410 | 410 | 410 | 410 |
| Recognition of road signals (Z80) | yes | yes | yes | yes | yes | yes |

| Examples | 7 | 8 | 9 | 10 | 11 | 12 |
|---|---|---|---|---|---|---|
| Crude glass | B | B | B | B | B | B |
| Heat-treatment temperature under hydrogen (°C) | 400 | 400 | 530 | 450 | 450 | 500 |
| Duration of heat-treatment under hydrogen (min) | 120 | 240 | 240 | 120 | 240 | 120 |
| Transmission (%) | 18.8 | 15.3 | 14.8 | 17.6 | 14.1 | 16.0 |
| x | 0.3500 | 0.3675 | 0.3758 | 0.3725 | 0.3985 | 0.3929 |
| y | 0.3738 | 0.3790 | 0.3751 | 0.3755 | 0.3782 | 0.4049 |
| UV cut-off (nm) | 420 | 420 | 420 | 420 | 420 | 420 |
| Recognition of road signals (Z80) | yes | yes | yes | yes | yes | yes |

| Examples | 13 | 14 | 15 | | | |
|---|---|---|---|---|---|---|
| Crude glass | C | C | C | | | |
| Heat-treatment temperature under hydrogen (°C) | 530 | 450 | 510 | | | |
| Duration of heat-treatment under hydrogen (min) | 240 | 30 | 5 | | | |
| Transmission (%) | 20.3 | 19.2 | 24.8 | | | |
| x | 0.3550 | 0.2970 | 0.2648 | | | |
| y | 0.3468 | 0.3109 | 0.2882 | | | |
| UV cut-off (nm) | 400 | 400 | 420 | | | |
| Recognition of road signals (Z80) | yes | yes | yes | | | |

## Claims

1. A non-photochromic, colored, borosilicate inorganic glass, which absorbs ultraviolet and which contains per 100 parts by weight of its borosilicate base :
- from 0.0020 to 1.5 parts by weight of Ag ;
- from 0.15 to 1.5 parts by weight of Cu ;
- from 0.25 to 10 parts by weight of at least one halogen selected from Cl, Br, I and F ; each halogen being advantageously, incorporated in an amount less than or equal to 3 parts by weight ;
- from 0.1 to 5 parts by weight of at least one reducing agent, said amounts of halogen(s) and of reducing agent(s) generating sufficient copper halide(s) for the absorption of the ultraviolet ; as well as
- an effective amount of at least one colorant..

2. The glass according to claim 1, **characterised in that** said reducing agent(s) is(are) selected from SnO, SnO₂, Sb₂O₃ and As₂O₃.

3. The glass according to claim 1 or 2, **characterised in that** said colorant(s) is(are) selected from Fe₂O₃, NiO, CoO, V₂O₅, MnO, SeO₂, Cr₂O₃ and Nd₂O₃.

4. The glass according to any one of claims 1 to 3, **characterised in that** it contains, per 100 parts by weight of its borosilicate base :
up to 7 parts by weight of Fe₂O₃,
and/or up to 2 parts by weight of NiO,
and/or up to 3 parts by weight of CoO,
and/or up to 10 parts by weight of V₂O₅,
and/or up to 2 parts by weight of SeO₂,
and/or up to 2 parts by weight of Cr₂O₃,
and/or up to 4 parts by weight of Nd₂O₃.

5. The glass according to any one of claims 1 to 4, **characterised in that** it contains an effective amount of NiO and/or of CoO.

6. The glass according to any one of claims 1 to 5, **characterised in that** it contains, per 100 parts by weight of its borosilicate base :
- from 0.0050 to 1 part by weight of Ag ;
- from 0.2 to 1 part by weight of Cu ;
- from 0 to 2 parts by weight of Cl;
- from 0 to 2 parts by weight of Br, with at least 0.25 parts by weight of Br+Cl;
- from 0 to 2 parts by weight of I;
- from 0 to 2 parts by weight of F ;
- from 0.2 to 3 parts by weight of SnO ;
- from 0 to 3 parts by weight of SnO₂ ;
- from 0 to 3 parts by weight of Sb₂O₃ ;
- from 0 to 3 parts by weight of As₂O₃ ;
- from 0 to 3 parts by weight of Fe₂O₃ ;
- from 0.0100 to 1 part by weight of NiO ;
- from 0.0050 to 1 part by weight of CoO ;
- from 0 to 5 parts by weight of V₂O₅ ;
- from 0 to 0.5 part by weight of MnO ;
- from 0 to 0.5 part by weight of SeO₂ ;
- from 0 to 0.5 part by weight of Cr₂O₃ ; and
- from 0 to 0.5 part by weight of Nd₂O₃,

7. The glass according to any one of claims 1 to 6, **characterised in that** its borosilicate base has the following composition by weight :
| | |
|---|---|
| SiO₂ | 25 - 60 % |
| B₂O₃ | 10 - 35 % |
| Al₂O₃ | 3 - 17 % |
| ZrO₂ | 0 - 13% |
| Li₂0 | 0 - 15 % |
| Na₂O | 0 - 15 % |
| K₂O | 0 - 15 % |
| with Li₂O + Na₂O + K₂O > 2 % | |
| MgO | 0 - 10 % |
| CaO | 0 - 15 % |
| SrO | 0 - 15 % |
| BaO | 0 - 15 % |
| with MgO + CaO + SrO + BaO > 1 % | |
| ZnO | 0 - 15 % |
| PbO | 0 - 8 % |
| TiO₂ | 0 - 8 % |
| Nb₂O₅ | 0 - 8 % |
| La₂O₃ | 0 - 8 % |
| Y₂O₃ | 0 - 8 % ; |
advantageously the following composition by weight :
| | |
|---|---|
| SiO₂ | 30 - 55 % |
| B₂O₃ | 15 - 28 % |
| Al₂O₃ | 6 - 12 % |
| ZrO₂ | 3 - 8 % |
| Li₂O | 1.5 - 3 % |
| Na₂O | 2 - 5 % |
| K₂O | 2.5 - 8 % |
| MgO | 0 - 3 % |
| CaO | 0 - 5 % |
| SrO | 0 - 5 % |
| BaO | 3 - 8 % |
| ZnO | 0 - 11% |
| PbO | 0 - 5 % |
| TiO₂ | 0 - 5 % |
| Nb₂O₅ | 0 - 5 % |
| La₂O₃ | 0 - 5 % |
| Y₂O₃ | 0 - 5 %. |

8. Sunglasses, which are corrective or non-corrective, made from a glass according to any one of claims 1 to 7.

9. A method of preparing a glass according to any one of claims 1 to 7, **characterised in that** it comprises :
- preparing a crude borosilicate glass which contains the suitable given amounts of silver, of copper, of halogen(s), of reducing agent(s) and colorant(s) ;
- optionally heat-treating said crude borosilicate glass, for 10 min to 2 hours, at a temperature between 450 and 650°C, to generate within it the crystal phase of the halide(s) which is responsible for the absorption of the ultraviolet ; so as to obtain a first generation glass of the invention or an intermediate glass ;
- polishing the surface of said borosilicate glass which is non-heat-treated or of said borosilicate intermediate glass which is heat-treated ;
- heat-treating said polished borosilicate glass under a reducing atmosphere, for 2 min to 12 hours, at a temperature between 250 and 650°C ; said heat-treatment ensuring the obtention of the coloration sought after and also ensuring the generation of the crystal phase of the halide(s) which is responsible for the absorption of the ultraviolet if this crystal phase has not been generated beforehand ; so as to obtain a second generation glass of the invention.

## Patentansprüche

1. Nicht-photochromes, gefärbtes, anorganisches Borsilicatglas, das ultraviolette Strahlung absorbiert und das pro 100 Gewichtsteile seiner Borsilicatbasis enthält:
- von 0,0020 bis 1,5 Gewichtsteile Ag;
- von 0,15 bis 1,5 Gewichtsteile Cu ;
- von 0,25 bis 10 Gewichtsteile von mindestens einem Halogen, das ausgewählt ist aus Cl, Br, l und F; wobei jedes Halogen vorteilhaft in einer Menge von weniger als oder gleich 3 Gewichtsteilen einverleibt ist,
- von 0,1 bis 5 Gewichtsteile von mindestens einem Reduktionsmittel, wobei die Mengen an Halogen(en) und Reduktionsmittel(n) ausreichend Kupferhalogenid(e) erzeugen für die Absorption der ultravioletten Strahlung; sowie
- eine wirksame Menge von mindestens einem Farbmittel.

2. Glas nach Anspruch 1, **dadurch gekennzeichnet, dass** das/die Reduktionsmittel ausgewählt ist/sind aus SnO, SnO₂, Sb₂O₃ und As₂O₃.

3. Glas nach Anspruch 1 oder 2, **dadurch gekennzeichnet, dass** das/die Farbmittel ausgewählt ist/sind aus Fe₂O₃, NiO, CoO, V₂O₅, MnO, SeO₂, Cr₂O₃ und Nd₂O₃.

4. Glas nach einem der Ansprüche 1 bis 3, **dadurch gekennzeichnet, dass** es pro 100 Gewichtsteile seiner Borsilicatbasis enthält:
bis zu 7 Gewichtsteile Fe₂O₃
und/oder bis zu 2 Gewichtsteile NiO
und/oder bis zu 3 Gewichtsteile CoO
und/oder bis zu 10 Gewichtsteile V₂O₅
und/oder bis zu 2 Gewichtsteile SeO₂
und/oder bis zu 2 Gewichtsteile Cr₂O₃
und/oder bis zu 4 Gewichtsteile Nd₂O₃.

5. Glas nach einem der Ansprüche 1 bis 4, **dadurch gekennzeichnet, dass** es eine wirksame Menge von NiO und/oder CoO enthält.

6. Glas nach einem der Ansprüche 1 bis 5, **dadurch gekennzeichnet, dass** es pro 100 Gewichtsteile seiner Borsilicatbasis enthält:
- von 0,0050 bis 1 Gewichtsteil Ag;
- von 0,2 bis 1 Gewichtsteil Cu;
- von 0 bis 2 Gewichtsteile Cl;
- von 0 bis 2 Gewichtsteile Br, wobei mindestens 0,25 Gewichtsteile Br + Cl sind;
- von 0 bis 2 Gewichtsteile l;
- von 0 bis 2 Gewichtsteile F;
- von 0,2 bis 3 Gewichtsteile SnO;
- von 0 bis 3 Gewichtsteile SnO₂;
- von 0 bis 3 Gewichtsteile Sb₂O₃;
- von 0 bis 3 Gewichtsteile As₂O₃;
- von 0 bis 3 Gewichtsteile Fe₂O₃;
- von 0,0100 bis 1 Gewichtsteil NiO;
- von 0,0050 bis 1 Gewichtsteil CoO;
- von 0 bis 5 Gewichtsteile V₂O₅;
- von 0 bis 0,5 Gewichtsteile MnO;
- von 0 bis 0,5 Gewichtsteile SeO₂;
- von 0 bis 0,5 Gewichtsteile Cr₂O₃ und
- von 0 bis 0,5 Gewichtsteile Nd₂O₃.

7. Glas nach einem der Ansprüche 1 bis 6, **dadurch gekennzeichnet, dass** seine Borsilicatbasis die folgende Zusammensetzung nach Gewicht aufweist:
SiO₂: 25 bis 60 %
B₂O₃: 10 bis 35 %
Al₂O₃: 3 bis 17 %
ZrO₂: 0 bis 13 %
Li₂O: 0 bis 15 %
Na₂O: 0 bis 15 %
K₂O: 0 bis 15 %
wobei Li₂O + Na₂O + K₂O > 2 % gilt,
MgO: 0 bis 10 %
CaO:0 bis 15%
SrO: 0 bis 15 %
BaO: 0 bis 15%
wobei MgO + CaO + SrO + BaO > 1 % gilt,
ZnO: 0 bis 15%
PbO: 0 bis 8 %
TiO₂: 0 bis 8 %
Nb₂O₅: 0 bis 8 %
La₂O₃: 0 bis 8 %
Y₂O₃: 0 bis 8 %;
vorteilhaft die folgende Zusammensetzung nach Gewicht aufweist;
SiO₂: 30 bis 55 %
B₂O₃: 15 bis 28 %
Al₂O₃: 6 bis 12 %
ZrO₂: 3 bis 8 %
Li₂O: 1,5 bis 3 %
Na₂O: 2 bis 5 %
K₂O: 2,5 bis 8 %
MgO: 0 bis 3 %
CaO: 0 bis 5 %
SrO: 0 bis 5 %
BaO: 3 bis 8 %
ZnO: 0 bis 11 %
PbO: 0 bis 5 %
TiO₂: 0 bis 5 %
Nb₂O₅: 0 bis 5 %
La₂O₃: 0 bis 5 %
Y₂O₃: 0 bis 5 %.

8. Sonnenbrille, die korrigierend oder nicht korrigierend ist, die hergestellt ist aus einem Glas nach einem der Ansprüche 1 bis 7.

9. Verfahren zur Herstellung eines Glases nach einem der Ansprüche 1 bis 7, **dadurch gekennzeichnet, dass** es umfasst:
- Herstellung eines rohen Borsilicatglases, das die geeignete gegebene Menge an Silber, Kupfer, Halogen(en), Reduktionsmittel(n) und Farbmittel(n) enthält;
- gegebenenfalls Wärmebehandlung des rohen Borsilicatglases über einen Zeitraum von 10 min bis 2 h bei einer Temperatur zwischen 450 und 650°C, um darin die Kristallphase des Halogenids/der Halogenide zu erzeugen, die verantwortlich ist für die Absorption der ultravioletten Strahlung, um so eine erste Generation Glas der Erfindung oder ein Zwischenproduktglas zu erhalten;
- Polieren der Oberfläche des Borsilicatglases, das nicht wärmebehandelt ist, oder von dem Borsilicatzwischenproduktglas, das wärmebehandelt ist;
- Wärmebehandlung des polierten Borsilicatglases unter einer reduzierenden Atmosphäre über einen Zeitraum von 2 min bis 12 h bei einer Temperatur zwischen 250 und 650°C, wobei die Wärmebehandlung das Erhalten der gewünschten Färbung gewährleistet und auch die Bildung der Kristallphase des Halogenids/der Halogenide die verantwortlich ist für die Absorption der ultravioletten Strahlung, wenn diese Kristallphase nicht zuvor erzeugt worden ist, um so eine Generation Glas der Erfindung zu erhalten.

## Revendications

1. Verre minéral borosilicaté, coloré, non photochromique, absorbant les ultraviolets qui renferme, pour 100 parties en poids de sa base borosilicatée :
- de 0,0020 à 1,5 partie en poids d'Ag ;
- de 0,15 à 1,5 partie en poids de Cu ;
- de 0,25 à 10 parties en poids d'au moins un halogène choisi parmi Cl, Br, 1 et F ; chaque halogène intervenant avantageusement en une quantité inférieure ou égale à 3 parties en poids ;
- de 0,1 à 5 parties en poids d'au moins un agent réducteur, lesdites quantités efficaces d'halogène(s) et d'agent(s) réducteur(s) générant suffisamment d'halogénure(s) de cuivre pour l'absorption des ultraviolets ; ainsi qu'
- une quantité efficace d'au moins un colorant.

2. Verre selon la revendication 1, **caractérisé en ce que** le(s)dit(s) agent(s) réducteur(s) est(sont) choisi(s) parmi SnO, SnO₂, Sb₂O₃ et As₂O₃.

3. Verre selon l'une des revendications 1 ou 2, **caractérisé en ce que** le(s)dit(s) colorant(s) est(sont) choisi(s) parmi Fe₂O₃, NiO, CoO, V₂O₅, MnO, SeO₂, Cr₂O₃ et Nd₂O₃.

4. Verre selon l'une quelconque des revendications 1 à 3, **caractérisé en ce qu'**il renferme, pour 100 parties en poids de sa base borosilicatée :
jusqu'à 7 parties en poids de Fe₂O₃,
et/ou jusqu'à 2 parties en poids de NiO,
etlau jusqu'à 3 parties en poids de CoO,
et/ou jusqu'à 10 parties en poids de V₂O₅,
et/ou jusqu'à 2 parties en poids de SeO₂,
et/ou jusqu'à 2 parties en poids de Cr₂O₃,
et/ou jusqu'à 4 parties en poids de Nd₂O₃.

5. Verre selon l'une quelconque des revendications 1 à 4, **caractérisé en ce qu'**il renferme une quantité efficace de NiO et/ou CoO.

6. Verre selon l'une quelconque des revendications 1 à 5, **caractérisé en ce qu'**il renferme, pour 100 parties en poids de sa base borosilicatée :
- de 0,0050 à 1 partie en poids d'Ag ;
- de 0,2 à 1 partie en poids de Cu ;
- de 0 à 2 parties en poids de Cl ;
- de 0 à 2 parties en poids de Br, avec au moins 0,25 parties en poids de Br + Cl ;
- de 0 à 2 parties en poids de I ;
- de 0 à 2 parties en poids de F ;
- de 0,2 à 3 parties en poids de SnO ;
- de 0 à 3 parties en poids de SnO₂ ;
- de 0 à 3 parties en poids de Sb₂O₃ ;
- de 0 à 3 parties en poids de As₂O₃
- de 0 à 3 parties en poids de Fe₂O₃ ;
- de 0,0100 à 1 partie en poids de NiO ;
- de 0,0050 à 1 partie en poids de CoO ;
- de 0 à 5 parties en poids de V₂O₅ ;
- de 0 à 0,5 partie en poids de MnO ;
- de 0 à 0,5 partie en poids de SeO₂ ;
- de 0 à 0,5 partie en poids de Cr₂O₃ ; et
- de 0 à 0,5 partie en poids de Nd₂O₃.

7. Verre selon l'une quelconque des revendications 1 à 6, **caractérisé en ce que** sa base borosilicatée présente la composition pondérale ci-après :
| | |
|---|---|
| SiO₂ | 25 - 60% |
| B₂O₃ | 10 - 35% |
| Al₂O₃ | 3 - 17% |
| ZrO₂ | 0 - 13% |
| Li₂O | 0 - 15% |
| Na₂O | 0 - 15% |
| K₂O | 0 - 15% |
| avec Li₂O + Na₂O + K₂O > 2 % | |
| MgO | 0 - 10% |
| CaO | 0 - 15% |
| SrO | 0 - 15 % |
| BaO | 0 - 15% |
| avec + CaO + SrO + BaO > 1% | |
| ZnO | 0 - 15% |
| PbO | 0 - 8% |
| TiO₂ | 0 - 8% |
| Nb₂O₅ | 0 - 8% |
| La₂O₃ | 0 - 8% |
| Y₂O₃ | 0 - 8% ; |
avantageusement la composition pondérale ci-après :
| | |
|---|---|
| SiO₂ | 30 - 55% |
| B₂O₃ | 15 - 28% |
| Al₂O₃ | 6 - 12% |
| ZrO₂ | 3 - 8% |
| Li₂O | 1,5 - 3% |
| Na₂O | 2 - 5% |
| K₂O | 2,5 - 8% |
| MgO | 0 - 3% |
| CaO | 0 - 5% |
| SrO | 0 - 5% |
| BaO | 3 - 8% |
| ZnO | 0 - 11% |
| PbO | 0 - 5% |
| TiO₂ | 0 - 5% |
| Nb₂O₅ | 0 - 5% |
| La₂O₃ | 0 - 5% |
| Y₂O₃ | 0 - 5%. |

8. Verres solaires, correcteurs ou non, en un verre selon l'une quelconque des revendications 1 à 7.

9. Procédé pour la préparation d'un verre selon l'une quelconque des revendications 1 à 7, **caractérisé en ce qu'**ïl comprend :
- la préparation d'un verre brut borosilicaté contenant les quantités adéquates d'argent, de cuivre, d'halogéne(s), d'agent(s) réducteur(s) et colorant(s) ;
- un éventuel traitement thermique dudit verre brut, mis en oeuvre pendant 10 minutes à 2 heures, à une température comprise entre 450 et 650°C, pour générer en son sein la phase cristalline d'halogénure(s) responsable de l'absorption des ultraviolets ; ce afin d'obtenir un verre de l'invention de première génération ou un intermédiaire ;
- un polissage de la surface dudit verre borosilicaté non traité thermiquement ou dudit verre borosilicaté intermédiaire traité thermiquement ;
- un traitement thermique sous atmosphère réductrice dudit verre borosilicaté poli ; ledit traitement thermique étant mis en oeuvre pendant 2 minutes à 12 heures, à une température comprise entre 250 et 650°C ; ledit traitement thermique assurant l'obtention de la coloration souhaitée et assurant également la génération de la phase cristalline d'halogénure(s) responsable de l'absorption des ultraviolets si cette dernière n'a pas été générée en amont ; ce afin d'obtenir un verre de l'invention de seconde génération.
